# EUROPÄISCHE PATENTSCHRIFT

(11) **EP 0 522 487 B1**
(45) Veröffentlichungstag und Bekanntmachung des Hinweises auf die Patenterteilung: **21.01.1998**
(21) Anmeldenummer: 92111438.5
(22) Anmeldetag: 06.07.1992
(51) Int. Cl.: B29C 47/92

(54) **Verfahren und Vorrichtung zur Steuerung des Querprofils bei der Blasfolienherstellung**
Process and device for controlling the thickness profile during manufacture of blown films
Procédé et dispositif pour le réglage de l'épaisseur lors de la fabrication de films soufflés

(30) Priorität: 08.07.1991 DE 9108417 U
(43) Veröffentlichungstag der Anmeldung: 13.01.1993
(73) Patentinhaber: KONERMANN, Stefan, 49525 Lengerich (DE)
(72) Erfinder: KONERMANN, Stefan, 49525 Lengerich (DE)
(74) Vertreter: TER MEER STEINMEISTER & PARTNER GbR

(56) Entgegenhaltungen:
- EP-A- 0 285 588
- DE-A- 2 658 518
- DE-A- 3 107 701
- DE-A- 3 743 720
- DE-U- 9 108 417
- US-A- 3 796 367
- US-A- 4 084 120
- US-A- 4 464 318

## Beschreibung

Die Erfindung betrifft eine Vorrichtung zur Steuerung des Querprofils bei der Blasfolienherstellung, bei der Kühlluft am Umfang der Folienblase mit Hilfe eines Kühlringes zugeführt wird, der eine segmentweise Kühlluftzufuhr mit Hilfe von gesonderten Stellgliedern in den einzelnen Umfangsbereichen der Folienblase gestattet.

Bei Vorrichtungen dieser Art wird die Foliendicke dadurch beeinflußt, daß die Kühlleistung am Umfang der Folienblase variiert wird. Bei einer Erhöhung der Kühlleistung in einem bestimmten Umfangssegment kühlt sich die Folie dort schneller ab, so daß sie nicht so stark gedehnt wird und eine entsprechend größere Dicke erhält. Umgekehrt kann durch eine Verringerung der Kühlleistung die Foliendicke vermindert werden.

In der DE-PS 26 58 518 wird eine Vorrichtung beschrieben, bei der oberhalb des Außen-Kühlrings ein Kranz von zusätzlichen Düsen angebracht ist, die durch eine gemeinsame Ringleitung gespeist werden und deren Durchsatz individuell mit Hilfe von Drosseln verstellbar ist. Gemäß der DE-OS 36 27 129 wird die Kühlluftströmung durch mehr oder weniger weit in das Innere des Kühlrings ragende Störstifte beeinflußt, so daß der Strömungswiderstand des Kühlrings segmentweise variiert werden kann. Aus der DE-OS 37 43 720 ist ein Kühlring bekannt, bei dem sich an eine umlaufende Staustufe zur Vergleichmäßigung der Kühlluftströmung nach innen radiale Trennwände anschließen, die den Kühlring in einzelne Segmente unterteilen. In jedem Segment ist ein entweder in der Höhe oder in Radialrichtung verstellbarer Stempel angeordnet, mit dem sich der Strömungswiderstand verändern läßt.

In einigen Fällen ist an der Folienblase oberhalb des Kühlrings eine Meßeinrichtung vorgesehen, mit der das Dickenprofil der Folie gemessen und als Rückkopplungssignal an eine Regeleinrichtung zurückgemeldet wird, so daß die Foliendicke mit Hilfe der Stellglieder am Kühlring in einem geschlossenen Regelkreis geregelt werden kann. In der Praxis erweist sich diese Regelung jedoch als äußerst schwierig.

Ein wesentlicher Nachteil der herkömmlichen Systeme besteht darin, daß es bei einer Stelloperation an einem einzelnen Stellglied zu einer Änderung des Strömungswiderstandes und damit zu einer Änderung der Druck- und Strömungsverhältnisse in der Ringleitung stromaufwärts der Stellglieder kommt, wodurch sich Rückwirkungen auf die benachbarten Stellglieder ergeben. Aufgrund dieser Wechselwirkungen zwischen den einzelnen Segmenten ist das Kühlsystem insgesamt nur schwer zu beherrschen.

In WO 90/15707 ist deshalb eine aerodynamische Entkopplung der einzelnen Kühlringsegmente vorgeschlagen worden. Dies wird beispielsweise durch getrennte Fördermittel für jedes einzelne Kühlringsegment erreicht, oder durch Stellglieder, mit denen ein mehr oder weniger großer Anteil der Kühlluft ohne Änderung des Gesamt-Strömungswiderstandes in dem Segment so umgelenkt wird, daß er nicht auf die Folienblase trifft.

Der Erfindung liegt die Aufgabe zugrunde, alternative Möglichkeiten aufzuzeigen, die Wechselwirkungen zwischen den Stelloperationen an den einzelnen Segmenten bei der Steuerung oder Regelung des Querprofils zu kompensieren.

Diese Aufgabe wird erfindungsgemäß durch die Merkmale der Ansprüche 1 und 2 gelöst.

Bei der Lösung nach Anspruch 1 ist eine Speichereinrichtung vorgesehen, in der in einem mehrdimensionalen Kennfeld für jeden Satz von Sollwerten ein zugehöriger Satz von Stellbefehlen für die Stellglieder abgespeichert ist. Wenn im Rahmen der Steuerung oder Regelung des Querprofils eine Veränderung des Sollwertes für ein einzelnes Segment erforderlich ist, wird nicht nur der Stellbefehl für das betreffende Segment geändert, sondern es wird in dem Kennfeld die neue Sollwertkombination aufgesucht und die Stellbefehle für sämtliche Segmente werden unter Berücksichtigung der Gesamtheit der Sollwerte entsprechend den im Kennfeld gespeicherten Daten neu eingestellt. Die gespeicherten Daten werden für den betreffenden Kühlring vorab empirisch ermittelt. Dabei kann man so vorgehen, daß für jedes Stellglied eine endliche Anzahl von Stellbefehlen vorgegeben wird und dann nacheinander alle möglichen Kombinationen von Stellbefehlen durchgespielt werden. Die Drücke oder Strömungsgeschwindigkeiten stromabwärts der Stellglieder, die für die Kühlluftdurchsätze in den einzelnen Segmenten repräsentativ sind, werden für jede Kombination von Stellbefehlen gemessen und gespeichert. Beim Betrieb des Kühlrings kann dann in umgekehrter Richtung anhand der gespeicherten Meßwerte, die den aktuellen Sollwerten entsprechen, der zugehörige Satz von Stellbefehlen ermittelt werden. Zwischenwerte oder Werte außerhalb des Kennfeldes können dabei ggf. durch Interpolation bzw. Extrapolation bestimmt werden.

Die Vorrichtung gemäß Anspruch 1 gestattet es somit, die wechselseitigen Abhängigkeiten zwischen den einzelnen Segmenten des Kühlrings von vorn herein bei der Bestimmung der Stellbefehle zu berücksichtigen. Da hierzu lediglich vorab gespeicherte Werte abgerufen werden müssen, läßt sich bereits mit Hilfe einer relativ einfachen und kostengünstigen Hardware eine ausreichend hohe Verarbeitungsgeschwindigkeit erreichen.

Bei einer modifizierten Ausführungsform gemäß Anspruch 2 ist anstelle der Speichereinrichtung ein Rechner mit ausreichend hoher Rechenleistung vorgesehen, der aus dem jeweiligen Satz von Sollwerten in Echtzeit gemäß einer zuvor empirisch ermittelten Rechenvorschrift den zugehörigen Satz von Stellbefehlen errechnet. Die Rechenvorschrift stellt ein mathematisches Modell dar, das die aerodynamischen Eigenschaften des Kühlrings widerspiegelt. Beispielsweise kann es sich im einfachsten Fall um ein lineares Modell handeln, das durch eine n x n-Transformationsmatrix gegeben ist (n = Anzahl der Segmente des Kühlrings). Es sind jedoch auch nichtlineare Modelle denkbar sowie dynamische Modelle, bei denen außer den Sollwerten auch die Änderungen der Sollwerte berücksichtigt werden, so daß auch die zeitliche Änderung des Strömungsmusters in dem Kühlring bei einer Änderung der Sollwerte angemessen modelliert werden kann.

Zur Vereinfachung der gespeicherten Kennfelder bzw. der mathematischen Modelle sowie zur Verkürzung der Ausregelzeiten ist es auch möglich, die Kühlringsegmente zu aerodynamisch getrennten Gruppen zusammenzufassen, die jeweils über gesonderte Fördermittel gespeist werden, so daß gegenseitige Wechselwirkungen nur zwischen den relativ wenigen Segmenten derselben Gruppe auftreten.

Im folgenden werden Ausführungsbeispiele der Erfindung anhand der Zeichnungen näher erläutert.

Es zeigen:
- Fig. 1: einen schematischen Schnitt durch ein Kühlringsegment mit einem Proportionalventil zur Regelung des Kühlluftdurchsatzes;
- Fig. 2: einen Schnitt durch ein Kühlringsegment mit einem Druckregelkreis; und
- Fig. 3: ein Blockdiagramm einer Vorrichtung gemäß einem Ausführungsbeispiel der Erfindung.

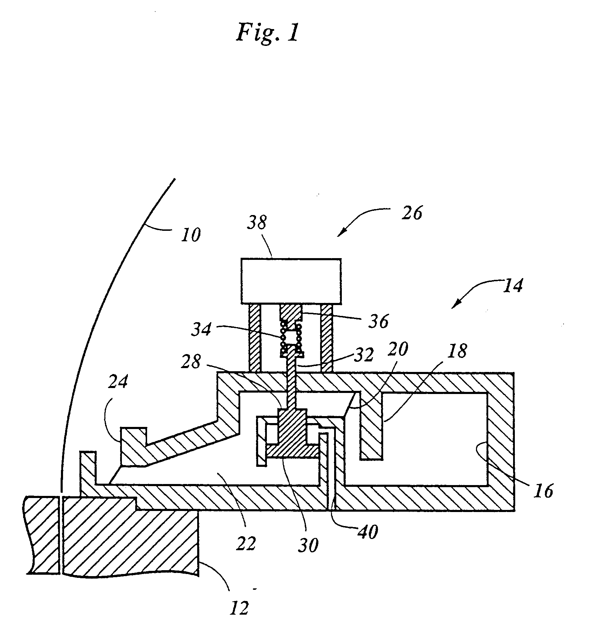

Wie aus Figur 1 hervorgeht, wird eine Folienblase 10 aus einem Werkzeug 12 extrudiert. Auf dem Werkzeug 12 ist ein die Folienblase umgebender Kühlring 14 montiert. Der Kühlring 14 weist in seinem äußeren Umfangsbereich eine umlaufende Ringkammer 16 auf, die an ein nicht gezeigtes Kühlluftgebläse angeschlossen ist. An die Ringkammer 16 schließt sich radial nach innen eine Staustufe 18 an, durch die eine gleichmäßige Umfangsverteilung der Kühlluftströmung erreicht wird. Hinter der Staustufe 18 ist das Innere des Kühlrings durch radiale Trennwände 20 in einzelne Segmente 22 unterteilt. Die Trennwände 20 erstrecken sich bis zum Austrittsspalt 24 am inneren Umfangsrand des Kühlrings.

Jedem Segment 22 des Kühlrings ist ein steuerbares Proportionalventil 26 zugeordnet, mit dem der Druck in dem Segment 22 und somit der Kühlluftdurchsatz durch den Austrittsspalt 24 in dem betreffenden Segment auf einen vorgegebenen Sollwert geregelt wird.

Das Proportionalventil 26 weist ein Ventilglied 28 auf, das an seinem unteren Ende mit einem Kolben 30 mit größerem Durchmesser und am oberen Ende mit einem Schaft 32 mit einem kleineren Durchmesser versehen ist. Der Schaft 32 verläuft druckdicht durch die obere Wand des Kühlrings 14 und stützt sich über eine Schrauben-Druckfeder 34 an einem Stößel 36 eines elektrisch steuerbaren Antriebsgliedes 38 ab.

Die Unterseite des Kolbens 30 ist mit dem Druck in dem Segment 22 beaufschlagt, während die Oberseite des Kolbens über einen Kanal 40 mit Atmosphärendruck beaufschlagt ist. Durch die Druckdifferenz zwischen dem Druck in dem Segment 22 und dem Atmosphärendruck wird der Kolben 30 entgegen der Kraft der Feder 34 nach oben gedrückt, so daß das Ventilglied 28 in die Strömungsbahn für die Kühlluft ragt und so den Luftdurchsatz durch diese Strömungsbahn drosselt. Diese Drosselung der Luftzufuhr führt zu einer Abnahme des Druckes in dem Segment 22 stromabwärts des Ventilgliedes 28 und somit zu einer Abnahme des Druckgefälles an dem Kolben 30. Auf diese Weise stellt sich schließlich ein Gleichgewicht bei einem von der Federkraft der Feder 34 abhängigen Druck ein. Das Antriebsglied 38 erhält ein Sollwertsignal von einer nicht gezeigten Regeleinrichtung, die zur Regelung des Dickenprofils der Folienblase 10 in Umfangsrichtung in Abhängigkeit von dem weiter oben an der Folienblase gemessenen Dickenprofil dient. Die Position des Stößels 36 wird durch das Antriebsglied 38 entsprechend dem Sollwertsignal eingestellt. Auf diese Weise wird die Federkraft der Feder 34 und damit der Druck in dem Segment 22 und schließlich der Kühlluftdurchsatz durch den Austrittsspalt 24 entsprechend dem Sollwert eingestellt. Wenn in der Ringleitung 16 stromaufwärts des Proportionalventils 26 Druckschwankungen auftreten, so kommt es vorübergehend zu einem Absinken des Druckes in dem Segment 22 unter den Sollwert. Diese Druckabweichung wird jedoch durch den Kolben 30 mit äußerst kurzer Regelverzögerung wieder ausgeglichen. Im Ergebnis wird so der Kühlluftdurchsatz in jedem einzelnen Segment des Kühlrings 14 auf den an das zugehörige Proportionalventil 26 übermittelten Sollwert geregelt.

In der oben erwähnten Querprofil-Regeleinrichtung brauchen folglich nur die Sollwerte für die einzelnen Segmente des Kühlrings vorgegeben zu werden, ohne Rücksicht auf die unvermeidlich durch die Ringleitung 16 vermittelte aerodynamische Kopplung zwischen den einzelnen Segmenten. Hierdurch wird die präzise und stabile Regelung des Querprofils der Folienblase 10 entscheidend vereinfacht.

Die oben beschriebene Vorrichtung ist jedoch mit Vorteil in den Fällen einsetzbar, in denen keine Regelung, sondern eine Steuerung des Querprofils der Folienblase 10 vorgesehen ist.

Die obere Oberfläche des Ventilglieds 28 ist beim gezeigten Ausführungsbeispiel wesentlich kleiner als die Wirkfläche des Kolbens 30, so daß der Einfluß des Druckes auf die Oberfläche des Ventilglieds vernachlässigbar ist. Um diesen Einfluß weiter zu verringern, kann das Ventilglied auch als plattenförmiger Sperrschieber ausgebildet weden.

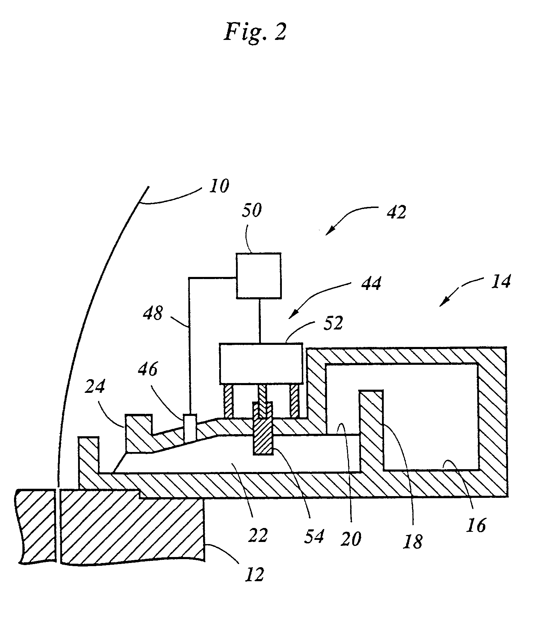

Die in Figur 2 gezeigte Vorrichtung unterscheidet sich von der zuvor beschriebenen Vorrichtung dadurch, daß anstelle des Proportionalventils 26 ein Regelkreis 42 vorgesehen ist, der ein elektrisch betätigbares Drosselventil 44, einen stromabwärts des Drosselventils in dem Segment 22 angeordneten Drucksensor 46 und einen über eine Rückkopplungsleitung 48 mit dem Drucksensor verbundenen Regler 50 enthält. Das Drosselventil 44 weist ein Antriebsglied 52 auf, mit dem die Position des Ventilglieds 54 in Abhängigkeit von einem Signal des Reglers 50 einstellbar ist. Der durch die Position des Ventilglieds 54 beeinflußte Druck in dem Segment 52 wird durch den Drucksensor 46 erfaßt und an den Regler 50 zurückgemeldet und wird so auf den Sollwert geregelt, der von der nicht gezeigten Querprofil-Regel- oder Steuereinrichtung an den Regler 50 übermittelt wird.

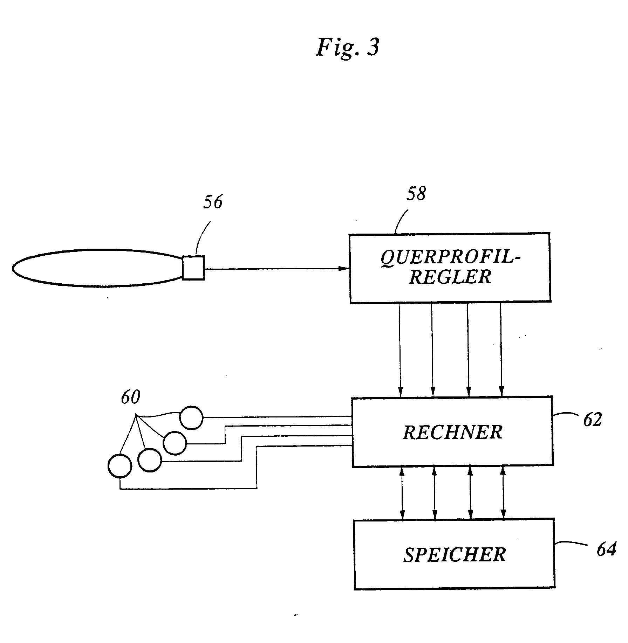

In Figur 3 ist ein Ausführungsbeispiel einer Vorrichtung zur Regelung des Querprofils dargestellt.

Ein am Umfang der Folienblase umlaufender Meßkopf 56 dient zur Aufnahme des Querprofils der Folie und liefert ein entsprechendes Meßsignal an einen Querprofilregler 58. Der in Figur 3 nicht gezeigte Kühlring ist in Segmente unterteilt, denen jeweils ein Stellglied 60 zugeordnet ist. Die Stellglieder 16 können beispielsweise wie die Drosselventile 44 gemäß Figur 2 ausgebildet und angeordnet sein. Die Segmente des Kühlrings sind zu Gruppen zusammengefaßt, die jeweils durch ein gesondertes Gebläse mit Kühlluft gespeist werden. In Figur 3 sind lediglich als Beispiel vier Stellglieder 60 einer aus vier Segmenten bestehenden Gruppe gezeigt. Der Querprofilregler 58 erzeugt für jedes der Stellglieder 60 ein Sollwertsignal, das den Sollwert für den Kühlluftdurchsatz in dem betreffenden Segment angibt und von dem Querprofilregler 58 so bestimmt wird, daß sich das gewünschte Dickenprofil der Folienblase ergibt. Die Sollwertsignale werden an einen Rechner 62 übermittelt, der einen zu den vier Sollwertsignalen gehörenden Satz von vier Stellbefehlen aus einem Speicher 64 abruft und an die Stellglieder 60 ausgibt.

Wenn der Sollwert für ein einzelnes Stellglied relativ hoch ist und dort ein entsprechend hoher Luftdurchsatz eingestellt wird, so kommt es zu einem Druckabfall in der Ringleitung 16 (Figur 2), und der Durchsatz an den benachbarten Stellgliedern wird abnehmen. Zur Korrektur muß deshalb auch an den benachbarten Stellgliedern ein höherer Wert eingestellt werden.

Die in dem Speicher 64 aufgrund von empirischen Voruntersuchungen gespeicherte Beziehung zwischen den Sollwertsignalen und den Stellbefehlen ist so gewählt, daß diese Korrekturen von vornherein berücksichtigt sind. Auf diese Weise ist sichergestellt, daß die tatsächlichen Durchsätze in den einzelnen Segmenten relativ genau mit den jeweiligen Sollwerten übereinstimmen.

In einer modifizierten Ausführungsform kann in dem Speicher 64 auch ein mathematisches Modell des Kühlrings gespeichert sein, anhand dessen der Rechner 62 die Stellbefehle aus den Sollwerten errechnet.

## Patentansprüche

1. Vorrichtung zur Steuerung des Querprofils bei der Blasfolienherstellung, mit einem Kühlring (14) zur Zufuhr von Kühlluft am Umfang der Folienblase (10) und einer Steuereinrichtung (58, 62, 64), die Stellbefehle für auf dem Umfang des Kühlrings verteilte Stellglieder (60) zur segmentweisen Steuerung des Kühlluftdurchsatzes in den einzelnen Umfangsbereichen der Folienblase erzeugt und die eine Sollwert-Vorgabeeinrichtung (58) zur Vorgabe von Sollwerten für den Kühlluftdurchsatz an den einzelnen Stellgliedern aufweist. **gekennzeichnet** durch eine Speichereinrichtung (64), in der für jede mögliche Kombination von Sollwerten ein Satz von Stellbefehlen gespeichert ist, derart, daß sich aufgrund dieser Stellbefehle unter Berücksichtigung der wechselseitigen Abhängigkeiten zwischen den einzelnen Segmenten des Kühlrings an jedem Stellglied ein Kühlluftdurchsatz ergibt, der dem zugehörigen Sollwert entspricht, und durch eine Ausgabeeinrichtung (62) zum Lesen und Ausgeben der Stellbefehle in Abhängigkeit von dem aktuellen Satz von Sollwerten.

2. Vorrichtung zur Steuerung des Querprofils bei der Blasfolienherstellung, mit einem Kühlring (14) zur Zufuhr von Kühlluft am Umfang der Folienblase (10) und einer Steuereinrichtung (58, 62, 64), die Stellbefehle für auf dem Umfang des Kühlrings verteilte Stellglieder (60) zur segmentweisen Steuerung des Kühlluftdurchsatzes in den einzelnen Umfangsbereichen der Folienblase erzeugt und die eine Sollwert-Vorgabeeinrichtung (58) zur Vorgabe von Sollwerten für den Kühlluftdurchsatz an den einzelnen Stellgliedern aufweist. **gekennzeichnet** durch einen Rechner (62), der anhand des aktuellen Satzes von Sollwerten und anhand eines die aerodynamischen Eigenschaften des Kühlrings wiederspiegelnden mathematischen Modells einen zugehörigen Satz von Stellbefehlen in der Weise berechnet und an die Stellglieder ausgibt, daß sich unter Berücksichtigung der wechselseitigen Abhängigkeiten zwischen den einzelnen Segmenten des Kühlrings an jedem Stellglied ein Kühlluftdurchsatz ergibt, der dem zugehörigen Sollwert entspricht.

3. Vorrichtung nach Anspruch 1 oder 2, dadurch **gekennzeichnet**, daß die Stellglieder (60) zu aerodynamisch voneinander getrennten Gruppen zusammengefaßt sind und daß für jede Gruppe von Stellgliedern eine gesonderte Kühlluftquelle sowie eine gesonderte Steuereinrichtung vorhanden ist.

## Claims

1. Device for controlling the transverse section during manufacture of blown films, having a cooling ring (14) for supply of cooling air to the circumference of the bubble (10) and a control device (58, 62, 64), which produces adjusting commands for actuators (60) distributed around the circumference of the cooling ring for segment-by-segment control of the throughput of cooling air in the individual circumferential regions of the bubble, and which comprises a desired value setting device (58) for specifying desired values for the throughput of cooling air at the individual actuators, **characterised** by a memory device (64), in which a set of adjusting commands is stored for each possible combination of desired values, such that on the basis of these adjusting commands, taking into consideration the mutual dependencies between the individual segments of the cooling ring, at each actuator a throughput of cooling air which corresponds to the associated desired value is effected, and by an output device (62) for reading and issuing the adjusting commands in dependence on the actual set of desired values.

2. Device for controlling the transverse section during manufacture of blown films, having a cooling ring (14) for supply of cooling air to the circumference of the bubble (10) and a control device (58, 62, 64) which produces adjusting commands for actuators (60) distributed around the circumference of the cooling ring for segment-by-segment control of the throughput of cooling air in the individual circumferential regions of the bubble and which comprises a desired value setting device (58) for specifying desired values for the throughput of cooling air at the individual actuators, **characterised** by a computer (62) which, on the basis of the actual set of desired values and on the basis of a mathematical model reflecting the aerodynamic properties of the cooling ring, calculates an associated set of adjusting commands and issues it to the actuators, such that, taking into account the mutual dependencies between the individual segments of the cooling ring, at each actuator a throughput of cooling air which corresponds to the associated desired value is effected.

3. Device according to claim 1 or 2, **characterised in that** the actuators (60) are combined to form groups separated aerodynamically from one another and that a separate source of cooling air and a separate control device is present for each group of actuators.

## Revendications

1. Dispositif pour régler le profil transversal lors de la fabrication de feuilles soufflées, comprenant un anneau de refroidissement (14) pour alimenter le pourtour de la feuille soufflée (10) en air de refroidissement et un dispositif de réglage (58, 62, 64) qui génère des instructions de réglage pour des organes de réglage (60) répartis sur le pourtour de l'anneau de refroidissement afin de moduler par segments le débit d'air de refroidissement dans les différentes zones du pourtour de la feuille soufflée et qui comporte un dispositif d'attribution de valeurs de consignes (58) pour attribuer des valeurs de consigne au débit d'air de refroidissement au niveau des différents organes de réglage, caractérisé par un dispositif de mémorisation (64) dans lequel, pour chaque combinaison possible de valeurs de consigne, est mémorisée une série d'instructions de réglage, de façon à obtenir au niveau de chaque organe de réglage, sur la base de ces instructions de réglage, en tenant compte des relations mutuelles entre les différents segments de l'anneau de refroidissement, un débit d'air de refroidissement qui correspond à la valeur de consigne associée, et par un dispositif de sortie (62) pour lire et sortir les instructions de réglage en fonction de la série instantanée de valeurs de consigne.

2. Dispositif pour régler le profil transversal lors de la fabrication de feuilles soufflées, comprenant un anneau de refroidissement (14) pour alimenter le pourtour de la feuille soufflée (10) en air de refroidissement et un dispositif de réglage (58, 62, 64) qui génère des instructions de réglage pour des organes de réglage (60) répartis sur le pourtour de l'anneau de refroidissement afin de moduler par segments le débit d'air de refroidissement dans les différentes zones du pourtour de la feuille soufflée et qui comporte un dispositif d'attribution de valeurs de consignes (58) pour attribuer des valeurs de consigne au débit d'air de refroidissement au niveau des différents organes de réglage, caractérisé par un calculateur (62) qui, sur la base de la série instantanée de valeurs de consigne et sur la base d'un modèle mathématique reflétant les caractéristiques aérodynamiques de l'anneau de refroidissement, calcule une série correspondante d'instructions de réglage et la transmet aux organes de réglage, de façon à obtenir au niveau de chaque organe de réglage, compte tenu des relations mutuelles entre les différents segments de l'anneau de refroidissement, un débit d'air de refroidissement conforme à la valeur de consigne correspondante.

3. Dispositif selon la revendication 1 ou 2, caractérisé en ce que les organes de réglage (60) sont réunis en groupes séparés les uns des autres sur le plan aérodynamique, et en ce que pour chaque groupe d'organes de réglage sont prévus une source d'air de refroidissement distincte et un dispositif de réglage distinct.
